Europäisches Patentamt

**European Patent Office**

Office européen des brevets

(19)

(11) Publication number: **0 223 873**
**B1**

(12)

# EUROPEAN PATENT SPECIFICATION

(45) Date of publication of the patent specification:
**12.09.90**

(51) Int. Cl.⁵: **B01D 46/02**

(21) Application number: **85114909.6**

(22) Date of filing: **25.11.85**

(54) **Dust separator.**

(43) Date of publication of application:
**03.06.87 Bulletin 87/23**

(45) Publication of the grant of the patent:
**12.09.90 Bulletin 90/37**

(84) Designated Contracting States:
**CH DE FR GB IT LI SE**

(56) References cited:
**GB-A- 1 461 687**
**US-A- 1 516 444**
**US-A- 3 963 467**

**The file contains technical information submitted after the application was filed and not included in this specification**

(73) Proprietor: **Borow, Henry, 185 Berlioz Apt. 2 N Nuns Island, Verdun Quebec H3E 1C1(CA)**

(72) Inventor: **Borow, Henry, 185 Berlioz Apt. 2 N Nuns Island, Verdun Quebec H3E 1C1(CA)**

(74) Representative: **Casalonga, Axel et al, BUREAU D.A. CASALONGA - JOSSE Morassistrasse 8, D-8000 München 5(DE)**

ACTORUM AG

## Description

BACKGROUND OF THE INVENTION

1. Field of the Invention

The present invention relates broadly to methods and apparatus for filtering solid matter from a gas stream. It particularly relates to improvements in bag house type filters for use in cleaning gas streams.

2. Description of the Prior Art

Various examples of the latter are known including that disclosed in Rolschau's U. S. Patent 3,963,467, dated June 15, 1976.

This document discloses a dust filter apparatus with gas inlet near the housing top. The dust laden air flows through the filter head and downwardly through all apertures of a baffle plate structure so that all filter bags which are mounted on tubular portions within the apertures are similarly charged. The structure of the apparatus requires double floors: a floor wall and the baffle plate structure. Dust deposits and accumulates in the head between the floor wall and the baffle plate structure causing operational problems, since the dust cannot be easily cleaned without stopping or shutdown. By omitting a primary dust separation system in the apparatus all particles enter at the top of the bags thus increasing bag damage and perforation.

Such dust filter apparatus and others of the prior art, however, suffer major disadvantages, including the problem of redepositing of dust on the filter bags during operation of the apparatus.

It has been established that high velocity fabric filtration has distinct advantages over filtration at low velocities in that the equipment required to clean a gas stream is reduced in size and first cost, as filtration velocity increases. However, experiments on pulse-jet cleaned filters have shown that penetration and pressure drop across the filter media increases markedly at high filtration velocities. The reasons for this include dust redeposition on the bags following a cleaning pulse. At high filtration velocities, most of the dust freed by a cleaning jet pulse is reswept back to the filter bags rapidly and does not fall away therefrom to be collected in the base of the bag house, which is usually of funnel or hopper shape. As a result, a thick dust deposition develops on the filter bags, pressure drop increases, and air flow decreases.

Commercial pulse jet filters are available wherein the gas inlet is located at the bottom of the filter housing. Although a bottom inlet is sometimes preferred, in that it permits large particles in the gas stream to fall immediately into the base-hopper to avoid accumulation on the filter bags, such has the distinct disadvantage of keeping dislodged dust suspended inside the housing and thus permitting easy redeposition on the filter bags.

As may be observed, with bottom entry, the net upward gas velocity within the housing will be greatest at the housing bottom, where the entire gas stream must enter and flow upward to be filtered, and least at the top, by which point all process gas will have been drawn through the bags. Following a cleaning pulse, dislodged dust must fall through the housing bottom, where upward gas velocity is highest. To reach the hopper, particles and agglomerates must have a terminal settling velocity greater than that of the upward moving gas. This limits filtration capacity of the bag house expressed in terms of cubic meter per minute of air per square meter of filter used. Clearly, when small particles or particles which do not agglomerate readily are to be collected in a pulse jet filter, a gas inlet near the housing top is of substantial advantage compared to a gas inlet near the bottom thereof. The advantage becomes greater as filtration velocities increase.

It is reasoned that if redeposition can be minimized in a pulse jet filter, reductions in pressure drop and penetration and increase in air flow will follow.

SUMMARY OF THE INVENTION

It is, therefore, a main object of the present invention to provide an improved apparatus of the latter-mentioned type which overcomes the problems discussed. Other objects and advantages will become apparent from the description hereinafter.

In accordance with the present invention, the aforementioned main objective is achieved by providing an improved filter housing, more particularly one wherein an improved gas flow pattern is established. The improved gas flow ensures that when the filter cake is freed from the surface of a bag during a cleaning pulse, it will fall through the filter housing to reach the base or hopper thereof, from which it may be conveniently removed. As a result of the present invention, the direction and velocity of gas flowing within the housing has a strong influence whether the dust falls to the base-hopper or redeposits on a bag. Thus, the gas flow in the housing in accordance with the present invention assists the freed dust to reach the base or hopper rather than hindering its movement thereto, such resulting in reduced redeposition and improved filter performance.

An important aspect inherent in the design in accordance with the present invention is thus the orientation and location of the gas inlet in the filter housing. Embodiments according to the present invention further provide improved dry scrubbing systems.

A construction in accordance with the present invention comprises a gas filter apparatus for separating solids from a gas stream comprising a housing having a top, base, and side walls defining a chamber and a partition wall extending across the chamber and separating the chamber into an upper compartment and a lower compartment. A gas inlet conveyor tube is provided in the chamber passing downwardly of the partition and into the lower compartment, with the portion of the conveyor tube passing through the upper compartment being impervious and the portion of the conveyor tube extending downwardly into the lower compartment being provided with exit means, including exit apertures on the conveyor tube adjacent the partition wall. The partition wall is provided with a plurality of openings surrounding the conveyor tube and communicating the lower compartment with the upper compartment. Filter means in the form of filter tubes cover each opening in the partition wall and extend downwardly in the lower compartment and parallel to the conveyor tube. At least one gas outlet communicates with the upper compartment, and suction means is associated with the gas outlet to provide a reduced pressure within the chamber. Discharge means are provided at the base of the housing associated with the lower compartment for discharging solid matter separated from the gas stream, whereby solid laden gas is conveyed into the lower compartment downwardly by the conveying tube, and the gas of the stream is drawn from the conveyor tube immediately past the partition, through the surrounding filter tubes in a manner to prevent the formation of counter gas flows to the gravity discharge of the solids being separated from the gas stream.

## BRIEF DESCRIPTION OF THE DRAWINGS

The invention is illustrated by way of example in the accompanying drawings, wherein:

Figure 1 is a side part sectioned elevational view taken along line 1-1 in Figure 2 of an apparatus in accordance with the present invention;

Figure 2 is a plan view of the apparatus shown in Figure 1;

Figure 3 is a sectioned view taken along line 3-3 in Figure 1;

Figure 4 is a fragmentary sectional view taken along line 4-4 in Figure 3;

Figure 5 is a side part sectioned elevational view of a further embodiment in accordance with the present invention;

Figure 6 is a fragmentary cross-sectional view of a detail shown in Figure 5; and

Figure 7 is a sectioned elevational view of a part of that shown in Figure 1.

## DESCRIPTION OF THE PREFERRED EMBODIMENTS

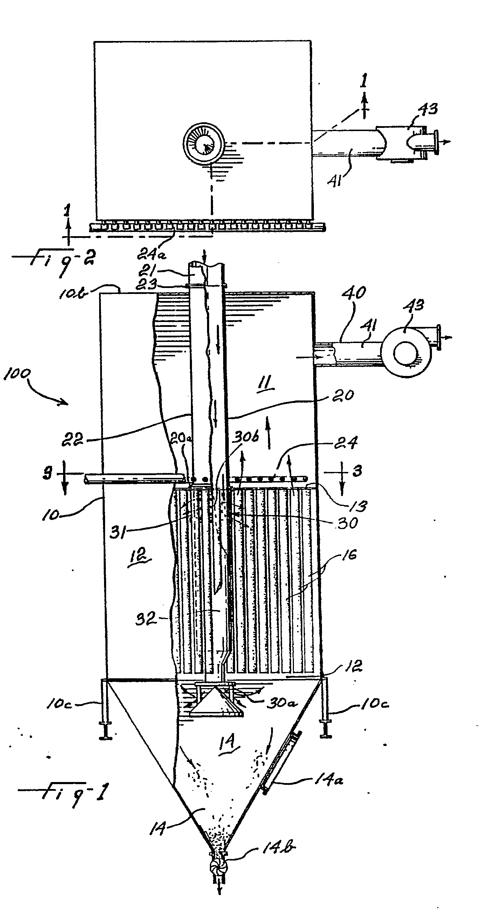

Referring firstly to Figure 1, there is seen a bag house type apparatus 100 comprising a chamber 10 having a gas conveying means 20 passing centrally through the top wall thereof, gas exit means 30 and 30a depending centrally within chamber 10 for use in distributing the conveyed gas and solid matter therein, directing at least a portion of the latter toward the funnel-shaped base of chamber 10, and fluid vent means 40 also located adjacent the top wall of chamber 10.

Chamber 10 comprises, in the case of the Figure 1 embodiment, a top plenum 11, otherwise known as the clean chamber, and a bottom plenum 12, otherwise known as the dirty chamber, divided by a partition 13, otherwise known as the tube sheet. Further, a base 14 is provided which is funnel-shaped and thus of pyramidal hopper configuration. Exit means 30 is located within plenum 12 and further exit means 30a is located within base 14. Plenums 11 and 12 are rectangular or square in cross-section although such is a matter of choice. Chamber 10 quite conceivably could be round in cross-section.

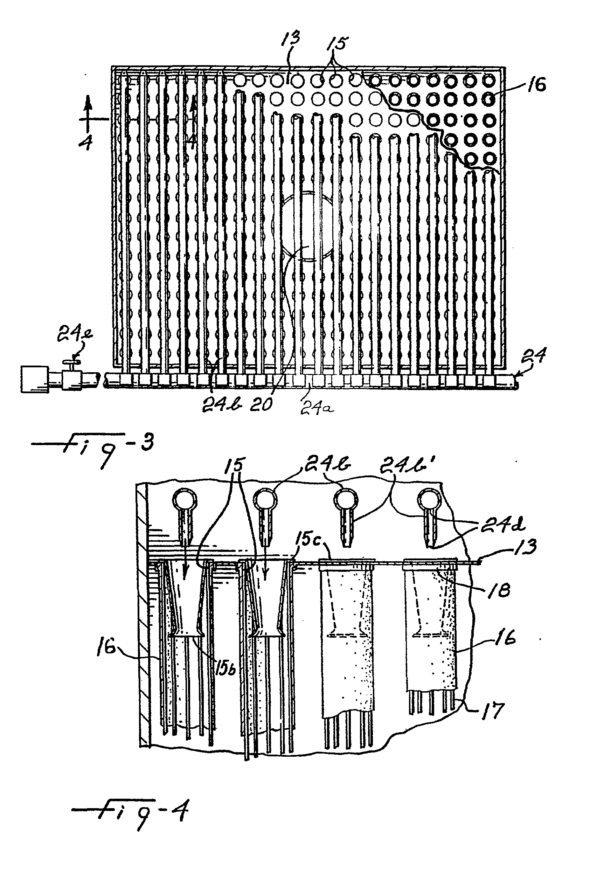

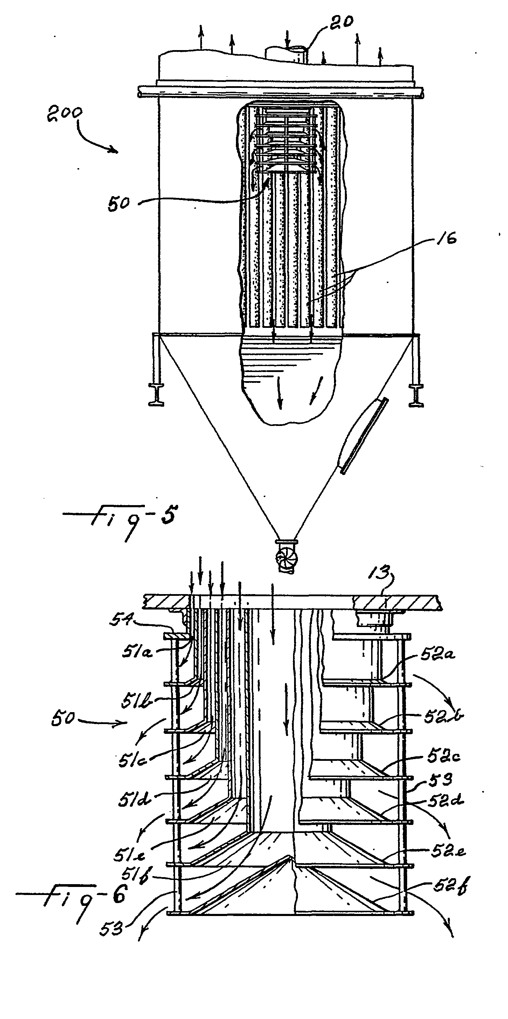

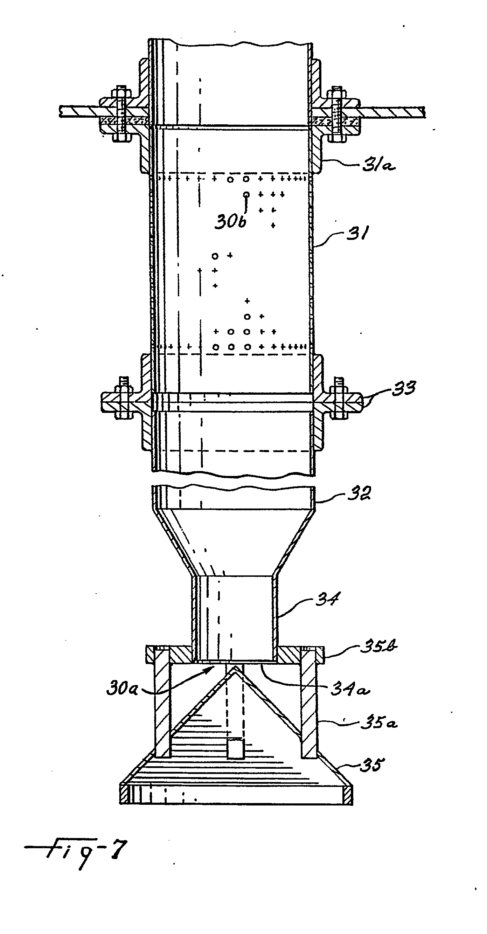

Partition or tube sheet 13, more clearly seen in Figure 4, includes a plurality of apertures 15 permitting fluid to flow from lower plenum 12 to upper plenum 11. A filter bag 16 depends from each aperture 15, such being supported upon annular lip portions 18 of partition 13, and further supported by a cylindrical wire frame 17 inserted downwardly into filter bag 16. As clearly seen from Figure 4, cylindrical wire frame 17 is suspended via lugs extending outwardly of a depending venturi member 15b, which itself is supported via its annular flange 15c upon partition 13. As will be appreciated, such an arrangement permits convenient installation and removal of filter bags 16.

Gas conveying means 20 comprises tubular members 21 and 22 connected together via a flange 23, member 22 extending centrally of chamber 10 to be secured to partition 13, via flange 20a, which is apertured to allow flow to exit means 30 and 30a. The tubular member 21 passes through the roof 10b of the plenum 11. It may also enter through a side wall of the plenum 11 (not shown).

Exit means 30 and 30a, clearly seen in Figure 7, comprises respectively a perforated or apertured tubular member 31 and a further unperforated, i.e., non-apertured, tubular member 32 bolted together via a flange 33, member 31 being bolted to the underside of partition 13 via a gasket and flange 31a, also clearly seen in Figure 7. Tubular member 32, it will be noted, is tapered toward the bottom thereof to provide a reduced portion 34 having an aperture 34a opening onto a cone-shaped deflector 35 supported by legs 35a rigidly secured to portion 34 via a flange 35b.

As seen in Figures 3 and 4, located vertically above partition 13, is a fluid dispensing device 24 comprising a feeder-header pipe 24a and branch pipes 24b. As indicated in Figure 4, branch pipes 24b are apertured at 24d for use in emitting compressed fluid therefrom in a direction toward and through apertures 15 and accordingly within and through filter bags 16. If desired, as in the preferred embodiment shown, a nozzle 24b' may be connected to pipe 24b surrounding aperture 24d whereby the fluid, namely, compressed air, is positively directed toward the inside of venturi member 15b for effective delivery to within bag 16. Feeder header pipe 24a is connected to a valve control means 24e shown diagrammatically in Figure 3, the purpose of which will become apparent from the description hereinafter. As seen in Figure 3, pipes 24b extend across and thus pass through conveyor means 20 but are sealed therefrom.

Base portion 14 also includes a manhole 14a providing ready access therewithin and a bottom gated discharge opening comprising a rotary air lock valve 14b.

As best seen in Figure 1, vent means 40 comprises a tubular member 41 suitably connected to the side wall of chamber 10. Member 41 includes therein air extraction blower arrangement 43 of well-known commercial type. As may be understood, vent means 40 might not be located in the side wall, such being a preferred location.

Chamber 10 is mounted via structural members 10c in a conventional manner.

Turning now to the second preferred embodiment of bag housing type apparatus shown and designated 200 in Figure 5, such apparatus is identical to afore-described apparatus 100, except for the conveyor fluid exit means. Thus, description of apparatus 200 will be limited to the conveyor gas exit means. Apparatus 200 provides a dry scrubbing system wherein the primary separation of particles is not desired.

Referring to Figure 6, there is seen exit means 50 comprising a plurality of concentrically arranged, downwardly depending, annular in cross-section, tubular depending passages 51a, 51b, 51c, 51d, and 51e, terminating respectively at reflectors 52a, 52b, 52c, 52d, and 52e. Also, a central aperture 51f terminates adjacent a conical deflector 52f. Further, that deflectors 52a, 52b, 52c, 52d, 52e, and 52f are secured in spaced relation one to another by spacer rods 53 suspended from flange 54 secured by suitable means to partition exit means 30 and 30a, exit means 50 terminates at a position located substantially above the terminal free ends of filter bags 16 and nearer to the partition.

Turning first to the operation of apparatus 100, an air stream to be cleaned is drawn by the blower arrangement 43 downwardly through conveyor tube 20 to exit via apertures 30b of exit means 30 and apertures 34a of exit means 30a. As the air exits through apertures 30b, it moves in a generally lateral and downward direction before reaching the bags 16 and is thereafter driven upwardly within the bags 16 with the air which has exited via exit means 30a. The latter is first deflected generally downwardly, by cone shaped deflector 35 and then rebounded off base portion 14, causing it to move in an upward direction. The air to be cleaned thus enters filter bags 16 from all sides thereof, the cleaned air passing through aperture 15 and thence through vent 41 aided by blower arrangement 43, following passage through top portion 11 of chamber 10.

In order to keep filter bags 16 generally cleaned, they are subjected to pulse-jetting of compressed air by fluid dispensing device 24. The latter operates via suitable well-known controls, which emits timed jet streams of air via apertures 24d for dispersal within filter bags 16, causing caked dust, etc., to be dislodged from the outer surface of bags 16 and thereafter carried therethrough by the air stream to be cleaned. Detailed description of controls 24a is dispensed with as it is believed construction of such is well within the knowledge of those to whom the invention is directed.

Controls (not shown) may be provided whereby selected ones of bags 16 are pulse jetted while others are not, the pulse jetting being operated through a suitable timing device (not shown). Thus, during continuous operation of apparatus 100 and 200 to be described, bags 16 in turn are periodically cleaned.

Turning now to the operation of the apparatus 200, such operates in a different fashion to that of apparatus 100 since the air to be cleaned is exited at a point substantially above the terminal free ends of filter bags 16 by exit means 50, as afore-indicated. Exit means 50 moves the air to be cleaned in an outward and downward direction within chamber 10, the exited air moving downwardly toward base portion 14 and following rebound therefrom, moves upwardly through filter bags 16 to exit from apertures 15. The continued path of the cleaned air is then as described above regarding apparatus 100. Thus, from Figure 5 and the arrows depicting the air movement, it will be seen air in this embodiment moves generally in first a downward and then an upward direction. Of course, air, as in the case of apparatus 100, enters filter bags 16 in a lateral direction more particularly though with apparatus 200 due to the design and location of the fluid stream exit means relative to the bags. On the other hand, if desired, extensive downward movement of air may be arranged in apparatus 200 tending to frictionally clean filter bags 16, thus aiding further cleaning of the same, i.e., in a non-dry scrubbing arrangement. Attention is directed to the arrows pointing downwardly from between respective filter bags. As in the case of apparatus 100, accumulated solid matter is periodically removed from the base portion 14 utilizing gate discharge 14b. With the dry scrubbing system of apparatus 200, the primary separation of particles not being desired, since the particles are needed for coating the filter bag surface, the fluid or air containing all particles is split and directed sideways and then downwards through the filter area by means of the deflecting concentric fins.

As will be realized, operation of apparatus 100 and 200 may be adjusted depending on the type of air or gas to be cleaned. Such adjustment may comprise increasing or decreasing pressure of the gas or air to be cleaned, varying the type of filter bag 16, i.e., type and density of filtering, the size of apertures 30b and 15, etc., size and shape of chamber 10, extraction force of blower arrangement 43, and other aspects.

Depending on the medium to be filtered, it is visualized, the filter apparatus in accordance with the present invention, in its simplest form, may merely comprise a chamber having a top, base, and side walls; a fluid and solid matter conveying means passing through the top wall substantially centrally thereof; fluid and solid matter exit means on the conveying means within the chamber and depending centrally there-within for use in distributing the fluid and solid matter from the conveying means for directing at least a portion of the solid matter toward the chamber base, and a fluid vent means in the chamber above the base for venting from the chamber, preferably located adjacent or possibly in the top wall. Such basic apparatus provides the unique gas circulation of the present invention whereby, apart from the filter bags, much matter is deposited directly in the base of the chamber. The apparatus in accordance with the invention thus tends to lighten the function carried out by the filter bags when used. A further feature of the apparatus according to the invention is the locating of the exit means relatively close to the partition or tube sheet. Not extending the exit means substantially downwardly of the tube sheet ensures keeping relatively low outlet velocity affording protection for the bags, when used.

It is visualized that variations may be made in the designs in accordance with the present invention and which may include providing more or fewer apertures 15 and locating the same one from another differently to that disclosed. In terms of filter bags 16 and apertures 15, such may comprise, as a variation, a single annular bag depending from a single annular aperture surrounding the exit means. Accordingly, an annular design of jet pulse arrangement would be utilized therewith. In a further embodiment, a plurality of concentrically arranged annular apertures and depending bags might be used. It is visualized that the apparatus, in accordance with the present invention, may also include, though not shown, a means for vibrating the filter bags, being an alternative to or an addition to the jet pulse bag decaking device. Such vibrating means may take the form of springly mounting the filter bag in association with an oscillating means to impart a shaking of the filter bag.

A number of advantages are provided by the apparatus in accordance with the present invention and such include: providing a simple and easy solution to the mechanical and structural problems associated with other gas-air type conveying means entrances; providing a reduction in horizontal gas velocity through the filter bags, such stemming from the central and symmetrical location of the gas-air entrance; providing reduction in filter bag damage, such stemming from the primary separation of large particles provided; providing more uniform velocity and particles distribution across the bag house; providing low air velocity at the entrance through the filter bags; as inferred above, in the case of a dust collector, arranging that large particles are separated from the gas-air upon leaving the centrally located conveying means which acts as a primary separator through the downward motion of inertia and discharge through the bottom air deflector, such as seen in Figure 1; providing that particles and agglomerate freed from a cleaning pulse are drawn toward the base-hopper by the air-gas flowing in the same downward direction, the advantage becoming greater as the air-gas flow or bag house capacity and filtration velocity increases, noting that with bottom entry of the conveyor means, the bag house capacity is limited by air velocity and with top entry, the contrary, the bag house capacity and performance being enhanced by the air velocity; providing, in the case of a dust collector, that most air enters the filter area radially through the perforated section of the inlet duct located as close as possible to the tube sheet, i.e., portion, only a small portion of the total air goes through the small bottom opening carrying the separated dust, the bottom outlet eliminating any pockets where the dust could collect, the air-gas deflector diverting air radially and preventing disturbance of any solids below the hopper; and finally, with reference to the case of a dry scrubber system, the primary separation of particles being not desired, and since the particles are needed for coating of bag surface, the air containing all particles is split and directed sidewards and then downwards through the filter area by means of deflecting concentric fins, exemplified by Figure 6.

It is understood that the gas conveyor tube 20 may be located in an area of the partition other than the center thereof; however, the central location is preferred.

**Claims**

1. A gas filter apparatus for separating solids from a gas stream comprising:
   - a housing having a top, base, and side walls defining a chamber (10);
   - a gas inlet means (20) conveying the gas stream into the chamber;
   - filter means in the form of filter tubes (16) extending downwardly inside the chamber;
   - at least one gas outlet (40) communicating with the chamber;
   - suction means (43) associated with the gas outlet to provide a reduced pressure within the chamber;
   - discharge means at the base (14) of the housing for discharging solid matter separated from the gas stream;
   characterized in that it comprises a partition wall (13) extending across the chamber and separating the chamber into an upper compartment (11) and a lower compartment (12), the partition wall being provided with a plurality of openings (15) communicating the lower compartment with the upper compartment and all openings in the partition wall being covered by the filter tubes (16), and in that said gas inlet means (20) is composed of a conveyor tube parallel to said filter tubes in the chamber (10) passing downwardly through an opening of the partition wall (13) and into the lower compartment (12), the portion (22) of the conveyor tube passing through said upper compartment (11) being impervious and the portion of the conveyor tube extending downwardly into the lower compartment (12) being provided with exit means (30, 30a; 50) including exit apertures (30b, 34a; 51a–51f) at least in the area of the conveyor tube adjacent the partition wall, whereby solid laden gas is conveyed into said lower compartment (12) downwardly by the conveying tube (20) and the gas of the stream is drawn from the conveyor tube immediately past the partition wall (13), through the filter tubes in order to prevent the formation of counter gas flows to the gravity discharge of the solids being separated from the gas stream.

2. An apparatus as defined in claim 1, including means for cleaning solid matter from said filter tubes.

3. An apparatus as defined in claim 1, wherein said chamber comprises an elongated tube-like member rectangular in cross-section and said base wall comprises a funnel-like configuration.

4. An apparatus as defined in claim 2, wherein said filter cleaning means comprises fluid conduit means arranged in the upper compartment in the vicinity of respective openings in the partition wall and the fluid conduit means having outlet means adapted to direct compressed fluid through said opening and into said filter tube, whereby to dislodge solid matter adhering to said filter tube.

5. An apparatus as defined in claim 4, wherein the filter cleaning means includes valve means for intermittently controlling the compressed fluid emitted from said outlet means.

6. An apparatus as defined in claim 4, wherein said fluid conduit means comprises a header pipe and depending branch pipes, and said outlet means are provided on said branch pipes in the form of jet nozzles directed to the respective openings in the partition wall.

7. An apparatus as defined in claim 3, including valve means at the base of said funnel-like configuration, providing access to remove therefrom solid matter deposited in said funnel-like configuration.

8. An apparatus as defined in claim 1, wherein said filter tubes each are supported from said partition wall and are further supported respectively by cylindrical shaped frame means extending within said filter tubes, said frame means being supported via lugs of a horn-shaped member having an annular flange supported upon said partition wall.

9. An apparatus as defined in claim 1, wherein said exit means includes a discharge opening adjacent the bottom end of the gas inlet conveyor tube to provide for gravity discharge of the solid matter, and said opening and bottom end of the conveyor tube are located between the partition wall and the bottom ends of the filter tubes but closer to the partition wall.

10. An apparatus as defined in claim 3, wherein said exit means includes a discharge opening adjacent the bottom end of the gas inlet conveyor tube to provide for gravity discharge of the solid matter, and said opening and bottom end of the conveyor tube are located close to the bottom ends of the filter tubes.

11. An apparatus as defined in claim 10, wherein said discharge opening and bottom end of the conveyor tube are located within said funnel-like configuration.

12. An apparatus as defined in claim 1, wherein said openings in the said partition wall are positioned in spaced relation one to the other and are provided generally throughout the area of the partition wall and surround said centrally located conveyor tube, the filter tubes covering respective openings being elongated and extending in the lower compartment parallel to the conveyor tube, said conveyor tube having a plurality of exit apertures in the upper area of the conveyor tube within the confines of the lower compartment and adjacent the partition wall and solid matter discharge means provided on the conveyor tube adjacent the bottom end thereof.

13. A gas filter apparatus as defined in claim 1, wherein the gas inlet conveyor tube passes into the upper compartment through the top wall.

14. A gas filter apparatus as defined in claim 1, wherein the gas inlet conveyor tube passes into the upper compartment through the side wall.

15. An apparatus as defined in claim 1, wherein the gas inlet conveyor passes centrally of the partition wall.

16. An apparatus as defined in claim 1, wherein said chamber comprises a tube-like member of circular cylindrical cross-section and said base wall comprises a funnel configuration.

**Patentansprüche**

1. Gasfiltervorrichtung zum Abtrennen von Feststoffen aus einer Gasströmung, enthaltend:
ein Gehäuse mit Ober-, Unter- und Seitenwänden, die eine Kammer (10) ausbilden;
eine Gaseinlaßeinrichtung (20), die die Gasströmung in die Kammer führt;
eine Filtereinrichtung in Form von Filterröhren (16), die sich in der Kammer nach unten erstrecken;
wenigstens einen Gasauslaß (40), der mit der Kammer in Verbindung steht;
eine Saugeinrichtung (43), die dem Gasauslaß zugeordnet ist, um in der Kammer einen verminderten Druck zu erzeugen;
eine Auslaßeinrichtung an der Unterseite (14) des Gehäuses zum Abziehen aus der Gasströmung abgetrennter fester Materie,
dadurch gekennzeichnet, daß sie eine Trennwand (13) enthält, die sich quer durch die Kammer erstreckt und die Kammer in ein oberes Abteil (11) und ein unteres Abteil (12) unterteilt und die mit einer Vielzahl von Öffnungen (15) versehen ist, die das untere Abteil mit dem oberen Abteil verbinden, wobei alle Öffnungen in der Trennwand von den Filterröhren (16) bedeckt sind, und daß die Gaseinlaßeinrichtung (20) aus einem Förderrohr besteht, das parallel zu den Filterröhren in der Kammer (10) nach unten durch eine Öffnung in der Trennwand (13) und in das untere Abteil (12) verläuft, wobei der Abschnitt (22) des Förderrohres, der durch das obere Abteil (11) verläuft, dicht ist und der Abschnitt des Förderrohres, der sich nach unten in das untere Abteil (12) erstreckt, mit Austrittseinrichtungen (30, 30a; 50) versehen ist, die Austrittsöffnungen (30b, 34a; 51a–51f) wenigstens in dem Bereich des Förderrohres, der der Trennwand benachbart ist, enthalten, wodurch mit Feststoffen beladenes Gas in das untere Abteil (12) von dem Förderrohr (20) nach unten geführt und das Gas aus der Strömung aus dem Förderrohr unmittelbar hinter der Trennwand (13) durch die Filterröhren gezogen wird, um die Bildung von Gasgegenströmungen entgegen dem durch Schwerkraft erfolgenden Abzug der aus der Gasströmung sich abtrennenden Feststoffe zu verhindern.

2. Vorrichtung nach Anspruch 1, enthaltend eine Einrichtung zum Abreinigen der Feststoffmaterie von den Filterröhren.

3. Vorrichtung nach Anspruch 1, bei der die Kammer ein langgestrecktes, röhrenartiges Element enthält, daß einen rechteckigen Querschnitt hat, und die Unterwand eine trichterförmige Gestalt hat.

4. Vorrichtung nach Anspruch 2, bei der die Filterreinigungseinrichtung eine Fluidleitungseinrichtung umfaßt, die in dem oberen Abteil in der Nähe der entsprechenden Öffnungen in der Trennwand angeordnet ist und die eine Auslaßeinrichtung aufweist, die dazu eingerichtet ist, ein komprimiertes Fluid durch die Öffnung und in die Filterröhre zu richten, um dadurch an der Filterröhre haftende Feststoffmaterie abzulösen.

5. Vorrichtung nach Anspruch 4, bei der die Filterreinigungseinrichtung eine Ventileinrichtung enthält, um das von der Auslaßeinrichtung abgegebene komprimierte Fluid intermittierend zu steuern.

6. Vorrichtung nach Anspruch 4, bei der die Fluidleitungseinrichtung ein Verteilerrohr und davon herabhängende Zweigrohre enthält und die Auslaßeinrichtungen an den Zweigrohren in Form von Strahldüsen vorgesehen sind, die auf die entsprechenden Öffnungen in der Trennwand gerichtet sind.

7. Vorrichtung nach Anspruch 3, enthaltend eine Klappeneinrichtung an der Unterseite des trichterförmigen Aufbaus, die Zugang zum Entfernen von Feststoffmaterie davon gewährt, die sich in dem trichterförmigen Aufbau abgesetzt hat.

8. Vorrichtung nach Anspruch 1, bei der die Filterröhren jeweils von der Trennwand gehalten sind und jeweils weiterhin durch zylindrisch gestaltete Rahmeneinrichtungen gehalten sind, die sich innerhalb der Filterröhren erstrecken und die über Ansätze eines hornförmigen Elements gehalten sind, das einen ringförmigen Flansch hat, der auf der Trennwand abgestützt ist.

9. Vorrichtung nach Anspruch 1, bei der die Austrittseinrichtung eine Auslaßöffnung benachbart dem unteren Ende des Gaseinlaßförderrohres enthält, um einen Abzug der Feststoffmaterie durch Schwerkraft zu schaffen, und wobei die Öffnung und das untere Ende des Förderrohres zwischen der Trennwand und den unteren Ende der Filterröhren, jedoch dichter an der Trennwand liegen.

10. Vorrichtung nach Anspruch 3, bei die Austrittseinrichtung eine Auslaßöffnung benachbart dem unteren Ende des Gaseinlaßförderrohres enthält, um einen Abzug der Feststoffmaterie durch Schwerkraft zu schaffen, wobei die Öffnung und das untere Ende des Förderrohres dicht an den unteren Enden der Filterröhren liegen.

11. Vorrichtung nach Anspruch 10, bei der die Auslaßöffnung und das untere Ende des Förderrohres in dem trichterförmigen Aufbau angeordnet sind.

12. Vorrichtung nach Anspruch 1, bei der die Öffnungen in der Trennwand in gegenseitigem Abstand angeordnet sind und im wesentlichen über die Fläche der Trennwand verteilt sind und das zentral angeordnete Förderrohr umgeben, wobei die Filterröhren, die die entsprechenden Öffnungen bedecken, langgestreckt sind und sich in dem unteren Abteil parallel zu dem Förderrohr erstrecken, das eine Mehrzahl von Austrittsöffnungen im oberen Bereich des Förderrohres innerhalb der Grenzen des unteren Abteils und benachbart der Trennwand aufweist, wobei eine Feststoffauslaßeinrichtung an dem Förderrohr benachbart dem unteren Ende desselben vorgesehen ist.

13. Gasfiltervorrichtung nach Anspruch 1, bei der das Gaseinlaßförderrohr durch die obere Wand in das obere Abteil verläuft.

14. Gasfiltervorrichtung nach Anspruch 1, bei der das Gaseinlaßförderrohr durch die Seitenwand in das obere Abteil verläuft.

15. Vorrichtung nach Anspruch 1, bei der der Gaseinlaßförderer zentral in bezug auf die Trennwand verläuft.

16. Vorrichtung nach Anspruch 1, bei der die Kammer ein rohrförmiges Element von kreisförmigem zylindrischem Querschnitt umfaßt und die Unterwand eine Trichtergestalt hat.

**Revendications**

1. Appareil de filtrage de gaz pour séparer des solides d'un courant de gaz, comportant:
   — un boîtier ayant des parois supérieure, de base et latérales définissant une chambre (10);
   — des moyens (20) d'entrée de gaz convoyant le courant de gaz dans la chambre;
   — des moyens de filtrage sous la forme de tubes de filtrage (16) s'étendant vers le bas à l'intérieur de la chambre;
   — au moins une sortie de gaz (40) communiquant avec la chambre;
   — des moyens de succion (43) associés avec la sortie de gaz afin de procurer une pression réduite à l'intérieur de la chambre;
   — des moyens de déchargement à la base (14) du boîtier pour décharger les matières solides séparées du courant de gaz;
   caractérisé en ce qu'il comporte une paroi de séparation (13) s'étendant à travers la chambre et séparant la chambre en un compartiment supérieur (11) et un compartiment inférieur (12), la paroi de séparation étant munie d'une pluralité d'ouvertures (15) faisant communiquer le compartiment inférieur avec le compartiment supérieur et toutes les ouvertures dans la paroi de séparation étant couvertes par les tubes de filtrage (16), et en ce que lesdits moyens (20) d'entrée de gaz sont composés d'un tube convoyeur parallèle auxdits tubes de filtrage dans la chambre (10) passant vers le bas à travers une ouverture de la paroi de séparation (13) et dans le compartiment inférieur (12), la partie (22) du tube convoyeur traversant ledit compartiment supérieur (11) étant imperméable et la partie du tube convoyeur s'étendant vers le bas dans le compartiment inférieur (12) étant munie de moyens de sortie (30, 30a; 50) comportant des ouvertures de sortie (30b, 34a; 51a à 51f) au moins dans la zone du tube convoyeur voisine de la paroi de séparation, grâce à quoi le gaz chargé en solides est convoyé dans ledit compartiment inférieur (12) vers le bas par le tube de convoyage (20) et le gaz du courant est extrait du tube convoyeur immédiatement après la paroi de séparation (13), à travers les tubes de filtrage afin d'empêcher la formation de contre-courants de gaz contrecarrant le déchargement par gravité des solides séparés du courant de gaz.

2. Appareil selon la revendication 1, comportant des moyens pour retirer les matières solides desdits tubes de filtrage.

3. Appareil selon la revendication 1, dans lequel ladite chambre comporte un élément en forme de tube allongé de section transversale rectangulaire et ladite paroi de base comporte une configuration en forme d'entonnoir.

4. Appareil selon la revendication 2, dans lequel lesdits moyens de nettoyage de filtre comportent des moyens formant conduit de fluide disposés dans le compartiment supérieur au voisinage des ouvertures respectives dans la paroi de séparation et les moyens formant conduit de fluide ayant des moyens formant orifice de sortie adaptés pour diriger le fluide comprimé à travers ladite ouverture et dans ledit tube de filtrage, afin de déloger de ce fait les matières solides adhérant audit tube de filtrage.

5. Appareil selon la revendication 4, dans lequel les moyens de nettoyage de filtre comportent des moyens formant vanne pour commander par intermittence le fluide comprimé émis par lesdits moyens formant orifice de sortie.

6. Appareil selon la revendication 4, dans lequel lesdits moyens formant conduit de fluide comportent un tuyau de refoulement et des tuyaux auxiliaires qui partent de celui-ci, et lesdits moyens formant orifice de sortie sont disposés sur lesdits tuyaux auxiliaires sous la forme de buses d'éjection dirigées vers les ouvertures respectives dans la paroi de séparation.

7. Appareil selon la revendication 3, comportant des moyens formant vanne à la base de ladite configuration en forme d'entonnoir, fournissant un accès afin de retirer de celle-ci des matières solides déposées dans ladite configuration en forme d'entonnoir.

8. Appareil selon la revendication 1, dans lequel lesdits tubes de filtrage sont chacun supportés à partir de ladite paroi de séparation et sont de plus supportés respectivement par des moyens formant bâti en forme de cylindre s'étendant à l'intérieur desdits tubes de filtrage, lesdits moyens formant bâti étant supportés par l'intermédiaire de pattes d'un élément en forme de corne ayant un flasque annulaire supporté sur ladite paroi de séparation.

9. Appareil selon la revendication 1, dans lequel lesdits moyens de sortie comportent une ouverture de déchargement adjacente à l'extrémité inférieure du tube convoyeur d'entrée de gaz afin d'assurer le déchargement par gravité des matières solides, et ladite ouverture et ladite extrémité inférieure du tube convoyeur sont situées entre la paroi de séparation et les extrémités inférieures des tubes de filtrage mais plus proches de la paroi de séparation.

10. Appareil selon la revendication 3, dans lequel lesdits moyens de sortie comportent une ouverture de déchargement voisine de l'extrémité inférieure du tube convoyeur d'entrée de gaz afin d'assurer le déchargement par gravité des matières solides, et ladite ouverture et ladite extrémité inférieure du tube convoyeur sont situées au voisinage des extrémités inférieures des tubes de filtrage.

11. Appareil selon la revendication 10, dans lequel ladite ouverture de déchargement et ladite extrémité inférieure du tube convoyeur sont situées à l'intérieur de ladite configuration en forme d'entonnoir.

12. Appareil selon la revendication 1, dans lequel lesdites ouvertures dans ladite paroi de séparation sont positionnées en relation espacée les unes par rapport aux autres et sont disposées globalement sur toute la surface de la paroi de séparation et entourent ledit tube convoyeur situé de façon centrale, les tubes de filtrage couvrant les ouvertures respectives étant allongés et s'étendant dans le compartiment inférieur parallèlement au tube convoyeur, ledit tube convoyeur ayant une pluralité d'ouvertures de sortie dans la zone supérieure du tube convoyeur à l'intérieur des confins du compartiment inférieur et au voisinage de la paroi de séparation et des moyens de déchargement de matières solides étant disposés sur le tube convoyeur au voisinage de l'extrémité inférieure de celui-ci.

13. Appareil de filtrage de gaz selon la revendication 1, dans lequel le tube convoyeur d'entrée de gaz passe dans le compartiment supérieur à travers la paroi supérieure.

14. Appareil de filtrage de gaz selon la revendication 1, dans lequel le tube convoyeur d'entrée de gaz passe dans le compartiment supérieur à travers la paroi latérale.

15. Appareil selon la revendication 1, dans lequel le convoyeur d'entrée de gaz passe au centre de la paroi de séparation.

16. Appareil selon la revendication 1, dans lequel ladite chambre comporte un élément en forme de tube de section transversale cylindrique circulaire et ladite paroi de base comporte une configuration en forme d'entonnoir.

_Fig-2_

_Fig-1_

13  15

16

4

24e

24b 20  24a

24

Fig-3

15  24b  24b'

24d

13

15c

18

16

16

15b

17

Fig-4

Fig-5

Fig-6

*Fig-7*